# EUROPÄISCHE PATENTSCHRIFT

(11) **EP 1 281 844 B1**
(45) Veröffentlichungstag und Bekanntmachung des Hinweises auf die Patenterteilung: **11.10.2006**
(21) Anmeldenummer: 02450169.4
(22) Anmeldetag: 01.08.2002
(51) Int. Cl.: F02D 13/02, F02D 9/04, B27B 17/08

(54) **Brennkraftmaschine**
Internal combustion engine
Moteur à combustion interne

(30) Priorität: 02.08.2001 AT 6102001 U
(43) Veröffentlichungstag der Anmeldung: 05.02.2003
(73) Patentinhaber: AVL List GmbH, 8020 Graz (AT)
(72) Erfinder: Laimböck Franz, Prof.Dr., 8051 Thal (AT)
(74) Vertreter: Babeluk, Michael

(56) Entgegenhaltungen:
- AT-B- 394 756
- DE-A- 2 834 828
- DE-A- 3 637 883
- US-A- 4 368 703

## Beschreibung

Die Erfindung betrifft eine Brennkraftmaschine mit zumindest einem den Durchflussquerschnitt eines Gaswechselkanals verändernden Steuerorgan, das mittels eines Betätigungsgliedes und eines Verbindungselementes je nach dem Betriebszustand der Brennkraftmaschine selbstständig verstellbar ist, wobei die Brennkraftmaschine in einem Gestell elastisch gelagert ist, und dass das Betätigungglied des Steuerorgans über das Verbindungselement an mindestens einem, gestellfesten Widerlager abgestützt ist, so dass das Steuerorgan durch die zu Folge des Drehmomentes der Brennkraftmaschine auftretende. Relativbewegung zwischen Brennkraftmaschine und Gestell mit zunehmenden Drehmoment im Sinne einer Vergrößerung des Durchflussquerschnittes des Gaswechselkanals des Gaswechselbeginnes verstellbar ist.

Mit Hilfe dieses Steuerorgans kann während des Maschinenlaufes beispielsweise der Querschnitt, der jeweils für den Auslass zur Verfügung steht, und die Menge der ausströmenden Gase verändert werden. Es lässt sich dadurch der Drehmomentenverlauf über einen größeren Bereich erstrecken, und zwar ergeben sich gute Drehmomentwerte bei niedriger Drehzahl sowie eine bessere Beschleunigung der Maschine bei im Schließsinne verstellten Steuerorgan, wobei es bei geöffnetem Steuerorgan zu einer möglichst hohen Leistungsabgabe kommt. Bisher erfolgt die Betätigung des Steuerorganes in Abhängigkeit von der Maschinendrehzahl bzw. -geschwindigkeit mit Hilfe eines Zentrifugalreglers (US 4 368 703 A) oder unter Verwendung eines elektrischen oder hydraulischen Servomotors und einer entsprechenden Kontrolleinrichtung (US 4 516 540 A). Es ist auch schon versucht worden, das Steuerorgan in Abhängigkeit von dem im Auslass herrschenden Druck über eine Membran zu betätigen. All diese Möglichkeiten bringen aber einen erhöhten technischen Aufwand mit sich, ohne bei mechanischer Betätigung eine Regelung des Steuerorganes nach Drehzahl und Last zu ermöglichen. Es ist auch schon bekannt, bei einer Zweitakt-Brennkraftmaschine den kurbelseitigen Rand der Einlassöffnung mittels eines Steuerkörpers in Kolbenhubrichtung zu verstellen, um beim Start bzw. im unteren Drehzahlbereich eine genügende Vorverdichtung zu erzielen und eine Luft- bzw. Gemischrückströmung in den Einlasskanal zu unterbinden (DE 36 37 883 A1), doch wird dieses dem Einlass zugeordnete Steuerorgan ebenfalls mittels eines Stellmotors betätigt.

Die EP 0 413 317 A1 zeigt ein Auslassventilsystem für eine Zweitaktbrennkraftmaschine mit mehreren Zylindern. Die Überström- und Auslassöffnungen sind verdreht um die Zylinderachse angeordnet, um eine kompakte Konstruktion zu ermöglichen. Im Auslasskanal ist jeweils ein Steuerorgan zur Steuerung des Durchflusses vorgesehen, welches durch einen Stellmotor betätigt wird.

Die DE 28 34 828 A beschreibt ein Verfahren und eine Einrichtung zum Dosieren der Brennstoff- oder Energiezufuhr, insbesondere beim Anfahren eines Antriebsaggregates einer Maschine. Dabei erfolgt die Brennstoff- oder Energiezufuhr zu dem Aggregat selbsttätig in Abhängigkeit von der durch das jeweils abzugebende Drehmoment des elastisch gelagerten Antriebsaggregates bewirkten Neigung des Aggregates gegenüber einem ortsfesten Widerlager.

Der Erfindung liegt daher die Aufgabe zugrunde, diesen Mangel zu beseitigen und eine Brennkraftmaschine der eingangs geschilderten Art zu schaffen, bei der die Steuerorganverstellung mit ganz einfachen Mitteln in Abhängigkeit vom Drehmoment erfolgt.

Die Erfindung löst die gestellte Aufgabe dadurch, dass mit der Vergrößerung des Durchfiussquerschnittes des Gaswechselkanals gleichzeitig auch der Gaswechselbeginn veränderbar ist, und dass in zumindest einem als Auslasskanal ausgebildeten Gaswechselkanal ein erstes Steuerorgan angeordnet ist, das durch Abstützung an einem gestellfesten Widerlager selbsttätig in Abhängigkeit des Drehmomentes betätigbar ist.

Eine im Gestell elastisch gelagerte Brennkraftmaschine hat einen bestimmten rotatorischen und/oder translatorischen Freiheitsgrad, der sich mit Zunahme der Drehmomentwerte verringert. Es ergibt sich also eine Relativbewegung zwischen der Brennkraftmaschine und dem Gestell, die zur Betätigung des den Durchflussquerschnitt des Auslasskanales verändernden ersten Steuerorganes ausgenützt wird. Dieses erste Steuerorgan öffnet sich also, wenn die Maschine mit hoher Belastung arbeitet, so dass ein größerer Querschnitt des Auslasskanales über eine längere Zeitspanne geöffnet wird, woraus höhere Drehmomentwerte bei höheren Drehzahlen resultieren. Dabei ist die Steuerorganverstellung völlig selbstständig sowie last- und drehzahlabhängig.

Insbesondere bei einer nach dem Zweitakt-Verfahren arbeitenden Brennkraftmaschine kann vorgesehen sein, dass im Einlasskanal ein zweites Steuerorgan angeordnet ist, das ebenfalls durch Abstützung an einem gestellfesten Widerlager betätigbar ist. Das in gleicher Weise wie das erste Steuerorgan betätigbare, im durch die kurbelseitige Kolbenkante gesteuerten Einlasskanal angeordnete zweite Steuerorgan wirkt bei großer Drehzahl und damit geöffneter Stellung füllungserhöhend und bei niedriger Drehzahl bzw. reduziertem Durchflussquerschnitt des Einlasskanales vorverdichtungserhöhend und damit drehmomentvergrößernd.

Eine besonders einfache Konstruktion ergibt sich, wenn das Steuerorgan als einseitig oder mittig gelagerte Klappe ausgebildet ist.

Bei einer Zweitakt-Brennkraftmaschine mit zumindest einem als Überströmkanal ausgebildeten Gaswechselkanal kann vorgesehen sein, dass in dem zumindest einen als Überströmkanal ausgebildeten Gaswechselkanal ein drittes Steuerorgan angeordnet ist, das durch Abstützung an einem gestellfesten Widerlager betätigbar ist.

Dabei ist es insbesondere bei einer nach dem Zweitakt-Verfahren arbeitenden Brennkraftmaschine vorteilhaft, wenn durch das Steuerorgan der Durchflussquerschnitt des Auslasskanales bzw. des Einlasskanales in Richtung der Zylinderachse veränderbar ist. Um eine wirksame Durchflusssteuerung durch den Auslasskanal zu erzielen, ist vorgesehen, dass das als einseitige Klappe ausgebildete erste Steuerorgan im Bereich einer der Brennraumdecke nächsten Kanaloberseite des Auslasskanales gelagert ist. Weiters kann vorgesehen sein, dass das als einseitige Klappe ausgebildete zweite Steuerorgan im Bereich einer bezüglich der Brennraumdecke entfernten Kanalunterseite des Einlasskanales gelagert ist. Durch diese Maßnahmen wird bei zumindest teilweise geschlossenem ersten bzw. zweiten Steuerorgan erreicht, dass durch die Steuerkante des Kolbens zuerst die durch die Klappe versperrte Hälfte des Auslasskanales bzw. Einlasskanales freigegeben wird, wodurch Kurzschlussströmungen durch den teilweise geschlossenen Querschnitt unterbunden werden.

Die vorliegende Durchflusssteuerung kann nicht nur bei Zweitakt-Brennkraftmaschinen, sondern auch bei Viertakt-Brennkraftmaschinen eingesetzt werden. In diesem Falle ist das erste Steuerorgan stromabwärts des Auslasshubventiles, vorzugsweise im Bereich eines Auslassflansches, angeordnet.

Die Erfindung wird im folgenden anhand der Figuren näher erläutert. Es zeigen
- Fig. 1: eine erfindungsgemäße Brennkraftmaschine in einer ersten Ausführungsvariante in Anwendung bei einer Kettensäge in vereinfachter Darstellung im Teilschnitt,
- Fig. 2: einen Teil dieser Brennkraftmaschine in größerem Maßstab in gleicher Darstellungsweise,
- Fig. 3: den Zylinder dieser Brennkraftmaschine im Axialschnitt,
- Fig. 4: die Brennkraftmaschine in einem Querschnitt gemäß der Linie IV-IV in Fig. 3 und
- Fig. 5: eine erfindungsgemäße Brennkraftmaschine in einer zweiten Ausführungsvariante in einem Axialschnitt.

Funktionsgleiche Teile sind in den Ausführungsvarianten mit gleichen Bezugszeichen versehen.

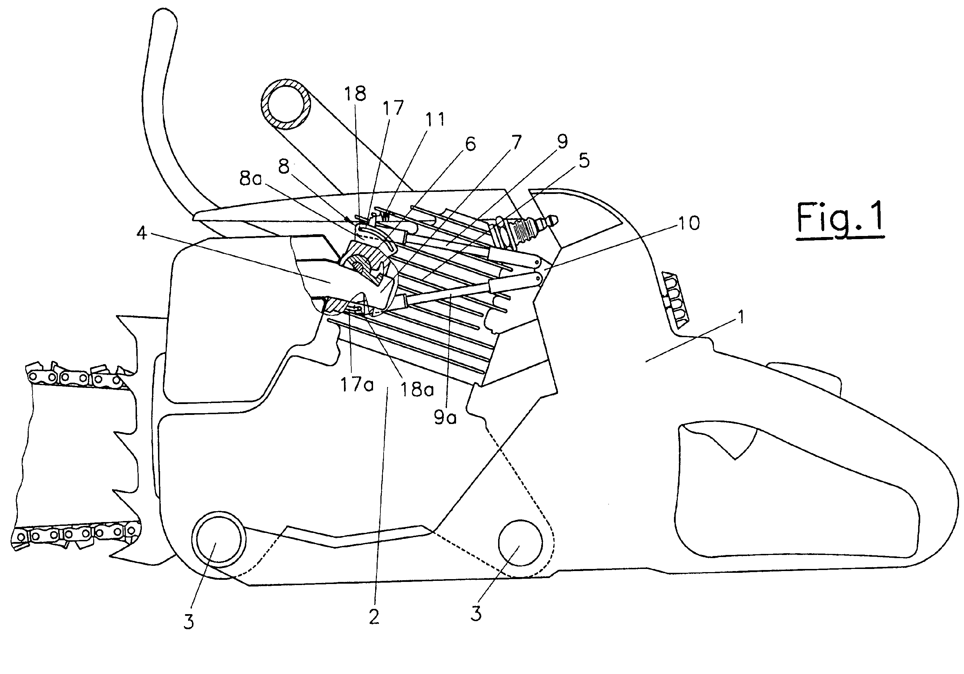

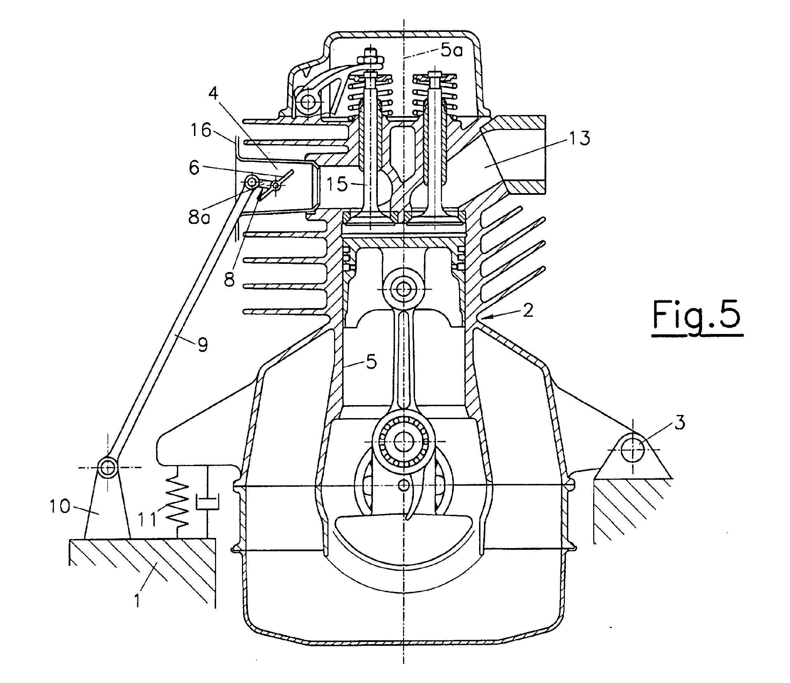

Im nur in Umrisslinien dargestellten Gestell 1 einer Kettensäge ist eine Einzylinder-Zweittakt-Brennkraftmaschine 2 an den Stellen 3 elastisch (Fig. 1 bis 4) bzw. drehbar (Fig. 5) gelagert. Im Auslasskanal 4 des Zylinders 5 der Brennkraftmaschine 2 ist ein als Klappe ausgebildetes erstes Steuerorgan 6 vorgesehen, mit dessen Hilfe der Durchflussquerschnitt des Auslassschlitzes 7 in Richtung der Zylinderachse 5a verändert werden kann.

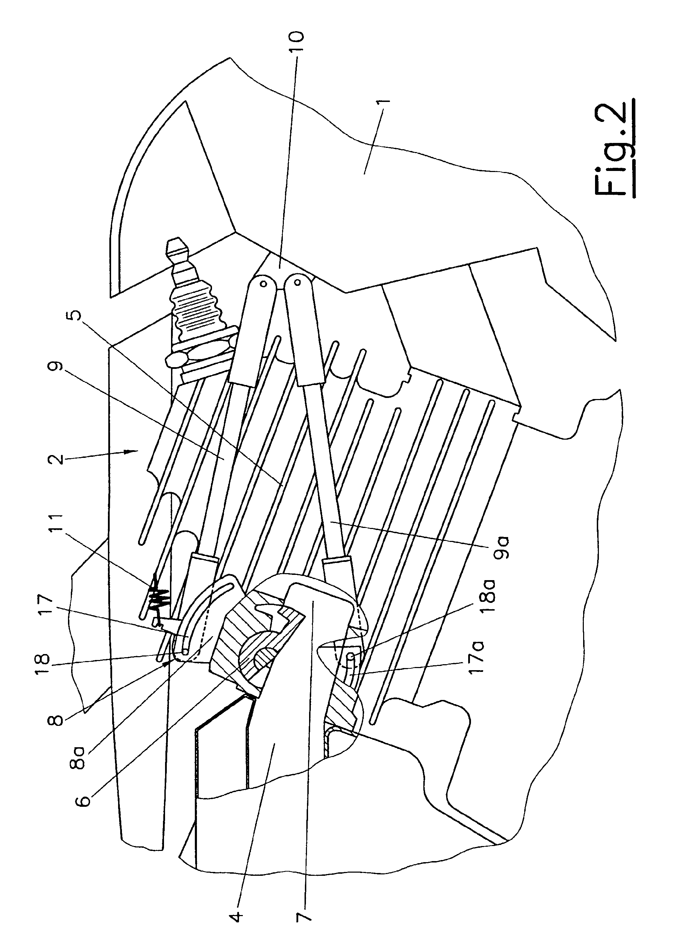

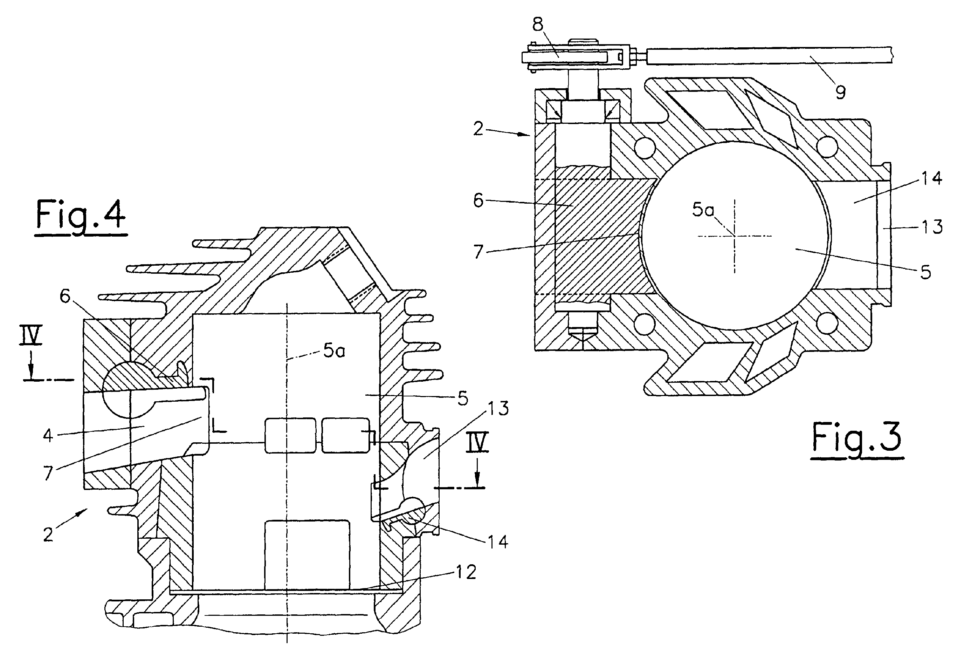

In den Fig. 1 und 2 ist die dem Leerlauf oder dem untersten Drehmomentbereich entsprechende Stellung des ersten Steuerorgans 6 dargestellt. Das erste Steuerorgan 6 soll den Auslassschlitz 7 des Auslasskanales 4 bei hohem Drehmoment bzw. größerer Maschinenbelastung voll freigeben, wie dies in Fig. 4 dargestellt ist. Um eine selbstständige Betätigung des Steuerorganes 6 in diesem Sinne zu erreichen, ist einerseits das Betätigungsglied 8, also der einem Kurbelarm entsprechende Hebel 8a über ein Gestänge 9 an einem gestellfesten Widerlager 10 abgestützt, andererseits die ganze Brennkraftmaschine 2 durch eine Zugfeder 11 im Uhrzeigersinn belastet. Wird mit der Kettensäge gearbeitet, so führt die Brennkraftmaschine 2 zufolge ihrer elastischen Lagerung im Gestell 1 und der auftretenden Reaktionskräfte eine kleine Drehung im Gegenuhrzeigersinn aus. Da aber der Hebel 8a über das Gestänge 9 festgehalten wird, ergibt sich eine Verdrehung des ersten Steuerorgans 6 aus der Stellung nach den Figuren 1 und 2 in die Stellung nach Fig. 3. Da die Arbeitsrichtung bei einer Kettensäge nicht immer gleich bleibt, sondern häufig gewechselt wird, ist der Hebel 8a über die Achse des ersten Steuerorganes 6 abwärts verlängert, und es greift dort ebenfalls ein entsprechendes Gestänge 9a an, das bei einer Verdrehung der Brennkraftmaschine 2 im Uhrzeigersinn zur Wirkung kommt, wobei der Hebel 8a für den Verbindungsbolzen 18, 18a mit dem Gestänge 9, 9a jeweils einen teilkreisförmigen Schlitz 17, 17a aufweist, so dass das jeweils eine Gestänge 9, 9a die durch das andere Gestänge 9a, 9 hervorgerufene relative Hebelbewegung nicht stört.

Wie aus den Figuren 3 und 4 hervorgeht, kann der durch die kurbelseitige Kolbenkante 12 gesteuerte Einlass 13 ebenfalls ein zweites Steuerorgan 14 aufweisen, dass dann in gleicher Weise wie das erste Steuerorgan 6 betätigt wird.

Die Fig. 5 zeigt eine nach dem Viertakt-Verfahren arbeitende Brennkraftmaschine, welche sich analog zu dem anhand der Fig. 1 bis 4 beschriebenen Beispiel ebenfalls an einem Gestell 1 abstützt, wobei die Brennkraftmaschine 2 gegenüber dem Gestell 1 über eine Feder 11 im Uhrzeigersinn vorgespannt ist. Das erste Steuerorgan 6 ist im Auslasskanal 4 stromabwärts des Auslasshubventiles 15 im Bereich eines Auslassflansches 16 angeordnet. Bei zunehmenden Drehmoment führt die Brennkraftmaschine bezüglich des Gestelles 1 eine kleine Drehung im Gegenuhrzeigersinn aus, wodurch das als mittig gelagerte Klappe ausgeführte erste Steuerorgan 6 den Durchflussquerschnitt des Auslasskanales 4 öffnet, wodurch eine hohe Leistungsabgabe ermöglicht wird.

## Patentansprüche

1. Brennkraftmaschine mit zumindest einem den Durchflussquerschnitt eines Gaswechselkanals verändernden Steuerorgan (6, 14), das mittels eines Betätigungsgliedes (8) und eines Verbindungselementes (9) je nach dem Betriebszustand der Brennkraftmaschine selbstständig verstellbar ist, wobei die Brennkraftmaschine in einem Gestell (1) elastisch gelagert ist, und dass das Betätigungsglied (8) des Steuerorgans (6, 14) über das verbindungelement (9) an mindestens einem gestellfesten Widerlager (10) abgestützt ist, so dass das Steuerorgan (6, 14) durch die zu Folge des Drehmomentes der Brennkraftmaschine auftretende Relativbewegung zwischen Brennkraftmaschine (2) und Gestell (1) mit zunehmenden Drehmoment im Sinne einer Vergrößerung des Durchflussquerschnittes des Gaswechselkanals des Gaswechselbeginnes verstellbar ist, **dadurch gekennzeichnet, dass** mit der Vergrößerung des Durchflussquerschnittes des Gaswechselkanals gleichzeitig auch der Gaswechselbeginn veränderbar ist, und dass in zumindest einem als Auslasskanal (4) ausgebildeten Gaswechselkanal ein erstes Steuerorgan (6) angeordnet ist, das durch Abstützung an einem gestellfesten Widerlager (10) selbsttätig in Abhängigkeit des Drehmomentes betätigbar ist.

2. Brennkraftmaschine nach Anspruch 1, **dadurch gekennzeichnet, dass** das Verbindungselement (9) durch ein Gestänge (9) oder einen Seilzug gebildet ist.

3. Brennkraftmaschine nach einem der Ansprüche 1 und 2, **dadurch gekennzeichnet, dass** das Steuerorgan (6, 14) als einseitig oder mittig gelagerte Klappe ausgebildet ist.

4. Brennkraftmaschine nach Anspruch 1 bis 3, **dadurch gekennzeichnet, dass** in zumindest einem als Einlasskanal (13) ausgebildeten Gaswechselkanal ein zweites Steuerorgan (14) angeordnet ist, das durch Abstützung an einem gestellfesten Widerlager betätigbar ist.

5. Brennkraftmaschine nach Anspruch 4, wobei die Brennkraftmaschine nach dem Zweitakt-Verfahren arbeitet und zumindest ein Gaswechselkanal als Überströmkanal ausgebildet ist, **dadurch gekennzeichnet, dass** in dem zumindest einen als Überströmkanal ausgebildeten Gaswechselkanal ein drittes Steuerorgan angeordnet ist, das durch Abstützung an einem gestellfesten Widerlager betätigbar ist.

6. Brennkraftmaschine nach einem der Ansprüche 1 bis 5, wobei die Brennkraftmaschine nach dem Zweitakt-Verfahren arbeitet und der Auslasskanal (4) und/oder der Einlasskanal (13) durch einen Kolben gesteuert ist, **dadurch gekennzeichnet, dass** durch das Steuerorgan (6, 14) der Durchflussquerschnitt des Auslasskanals (4) bzw. des Einlasskanals (13) in Richtung der Zylinderachse veränderbar ist.

7. Brennkraftmaschine nach Anspruch 6, **dadurch gekennzeichnet, dass** das als einseitige Klappe ausgebildete erste Steuerorgan (6) im Bereich einer der Brennraumdecke nächsten Kanaloberseite des Auslasskanals (4) gelagert ist.

8. Brennkraftmaschine nach Anspruch 6 oder 7, **dadurch gekennzeichnet, dass** das als einseitige Klappe ausgebildete zweite Steuerorgan (14) im Bereich einer bezüglich der Brennraumdecke entfernten Kanalunterseite des Einlasskanals (13) gelagert ist.

9. Brennkraftmaschine nach einem der Ansprüche 1 bis 8, wobei die Brennkraftmaschine nach dem Viertakt-Verfahren arbeitet.

## Claims

1. Internal combustion engine with at least one control element (6, 14) for variation of the flow cross-section of a charge exchange passage, which control element (6, 14) is automatically adjustable in accordance with the engine mode by means of an actuating member (8) and a connecting element (9), wherein the internal combustion engine is flexibly supported in a frame (1), and the actuating member (8) of the control element (6, 14) is supported via the connecting element (9) on at least one pivot (10) fixed in the frame (1), such that the control element (6, 14) can adjust itself, due to the relative movement between engine (2) and frame (1) resulting from the torque of the combustion engine, thereby increasing the flow cross-section of the charge exchange passage with increasing torque, **characterized in that** the beginning of the gas exchange process can be varied simultaneously with the increase of the flow cross-section of the gas exchange passage and that a first control element (6) is provided in at least one gas exchange passage serving as an exhaust passage (4), which control element (6) can be automatically actuated depending on the torque due to being supported on a pivot (10) fixed in the frame (1).

2. Internal combustion engine according to claim 1, **characterized in that** the connecting element (9) is formed by a rod (9) or a cable.

3. Internal combustion engine according to claim 1 or 2, **characterized in that** the control element (6, 14) is formed by a flap turning about an edge or a central axis.

4. Internal combustion engine according to any of claims 1 to 3, **characterized in that** a second control element (14) is provided in at least one charge exchange passage configured as an intake passage (13), said control element (14) being actuated by supporting it on a pivot fixed in the frame.

5. Internal combustion engine according to claim 4, the engine operating on the two-stroke cycle and at least one charge exchange passage being configured as a transfer passage, **characterized in that** a third control element is provided in the at least one charge exchange passage configured as a transfer passage, which is also actuated by supporting it on a pivot fixed in the frame.

6. Internal combustion engine according to any of claims 1 to 5, the engine operating on the two-stroke cycle and the exhaust passage (4) and/or intake passage (13) being controlled by a piston, **characterized in that** the control element (6, 14) is capable of varying the flow cross-section of the exhaust passage (4) and/or the intake passage (13) in the direction of the cylinder axis.

7. Internal combustion engine according to claim 6, **characterized in that** the first control element (6) configured as a one-sided flap is held at the top side of the exhaust passage (4) next to the top of the combustion chamber.

8. Internal combustion engine according to claim 6 or 7, **characterized in that** the second control element (14) configured as a one-sided flap is held at the bottom side of the intake passage (13) distant from the top of the combustion chamber.

9. Internal combustion engine according to any of claims 1 to 8, **characterized in that** the engine operates on the four-stroke cycle.

## Revendications

1. Moteur à combustion interne, avec au moins un organe de commande (6, 14), modifiant la section transversale de passage d'écoulement d'un canal de changement des gaz, organe de commande manoeuvrable automatiquement selon l'état de fonctionnement du moteur à combustion interne au moyen d'un organe d'actionnement (8) et d'un élément de liaison (9), le moteur à combustion interne étant monté élastiquement dans un bâti (1), et en ce que l'organe d'actionnement (8) de l'organe de commande (6, 14) est soutenu par l'intermédiaire de l'élément de liaison (9) en au moins un contre-palier (10) fixé au bâti, de manière que l'organe de commande (6, 14) soit manoeuvrable du fait du déplacement relatif, se produisant à la suite du couple de rotation du moteur à combustion interne, entre le moteur à combustion interne (2) et le bâti (1), avec un couple de rotation allant en augmentant dans le sens d'une augmentation de la section transversale de passage d'écoulement du canal de changement des gaz du début du changement des gaz, **caractérisé en ce que**, avec le grossissement de la section transversale de passage d'écoulement du changement des gaz, est également modifiable simultanément également le début de changement des gaz, et **en ce que**, en au moins un canal de changement des gaz réalisé, sous forme de canal d'échappement (4), est disposé un organe de commande (6) qui est actionnable automatiquement en fonction du couple de rotation, au moyen de l'appui sur le contre-palier (10) fixé au bâti.

2. Moteur à combustion interne selon la revendication 1, **caractérisé en ce que** l'élément de liaison (9) est formé par une tringlerie (9) ou un câble de traction.

3. Moteur à combustion interne selon la revendication 1 et **caractérisé en ce que** l'organe de commande (6, 14) est réalisé sous forme de clapet monté en palier sur un côté ou centralement.

4. Moteur à combustion interne selon les revendications 1 à 3, **caractérisé en ce qu'**en au moins un canal de changement des gaz réalisé sous forme de canal d'admission (13) est disposé un deuxième organe de commande (14) actionnable par l'appui sur un contre-palier fixé au bâti

5. Moteur à combustion interne selon la revendication 4, le moteur à combustion interne travaillant selon le principe à deux temps et au moins un canal de changement des gaz étant réalisé sous la forme de canal de transfert, **caractérisé en ce que** dans le au moins un canal de changement des gaz, réalisé sous la forme de canal de transfert, est disposé un troisième de commande actionnable par appui sur un contre-palier fixé au bâti

6. Moteur à combustion interne selon l'une des revendications 1 à 5, le moteur à combustion interne travaillant selon le procédé à deux temps, et le canal d'échappement (4) et/ou le canal d'admission (13) étant commandé par un piston, **caractérisé en ce que** la section transversale de passage d'écoulement du canal d'échappement (4) et/ou du canal d'admission (13) est modifiable en direction de l'axe de cylindre, au moyen de l'organe de commande (6, 14).

7. Moteur à combustion interne selon la revendication 6, **caractérisé en ce que** le premier organe de commande (6), réalisé sous la forme de clapet monté en palier sur un côté, est monté dans la zone d'une face supérieure de canal, placée immédiatement à la suite du plafond de chambre de combustion, du canal d'échappement (4).

8. Moteur à combustion interne selon la revendication 6 ou 7, **caractérisé en ce que** le deuxième organe de commande (14), réalisé sous la forme de clapet monté en palier sur un côté, est monté dans la zone d'une face inférieure de canal, éloignée du plafond de chambre de combustion, du canal d'admission (13).

9. Moteur à combustion interne selon l'une des revendications 1 à 8, le moteur à combustion interne travaillant selon le procédé à quatre temps.
